# EUROPEAN PATENT APPLICATION

(11) **EP 3 839 942 A1**
(43) Date of publication of application: **23.06.2021**
(21) Application number: 18930225.0
(22) Date of filing: 21.12.2018
(51) Int. Cl.: G10L 15/06

(54) **QUALITY INSPECTION METHOD, APPARATUS, DEVICE AND COMPUTER STORAGE MEDIUM FOR INSURANCE RECORDING**

(30) Priority: 17.08.2018 CN 201810939070
(71) Applicant: One Connect Smart Technology Co., Ltd. (Shenzhen), Shenzhen, Guangdong 518000 (CN)
(72) Inventor: ZHANG, Yuqiang, Hong Kong Cooperation Zone Shenzhen, Guangdong 518000 (CN)
(74) Representative: de Arpe Fernandez, Manuel
(86) International application number: PCT/CN2018/122623
(87) International publication number: WO 2020/034526

(57) **Abstract**

The invention discloses a quality inspection method for insurance recording, including the steps of: receiving a request of quality inspection for insurance recording, and acquiring a policy identifier contained in the request of quality inspection for insurance recording and target recording information associated with the policy identifier; inputting the target recording information into a preset voice recognition model to obtain target text information corresponding to the target recording information; determining an insurance type according to the policy identifier, acquiring a basic policy corresponding to the insurance type and insurance information in the basic policy, and determining standard text information according to the insurance information; and comparing the target text information with the standard text information to obtain a comparison result, and outputting a quality inspection result for insurance recording according to the comparison result. The invention also discloses a quality inspection device, apparatus and computer storage medium for insurance recording. The invention realizes efficient and automatic quality inspection for insurance recording.

## Description

This application claims priority to Chinese Patent Application No. 201810939070.1, filed in the Chinese Patent Office on August 17, 2018, entitled "Quality Inspection Method, Device, Apparatus and Computer Storage Medium for Insurance Recording", the entire contents of which are incorporated herein by reference.

### TECHNICAL FIELD

The invention relates to the field of information processing, in particular to a quality inspection method, device, apparatus and computer storage medium for insurance recording.

### BACKGROUND

With the continuous expansion of insurance business, some conditions not standardized may exist in insurance sales. The China Insurance Regulatory Commission and the China Banking Regulatory Commission issued a "Notice on Further Strengthening the Compliance Goals and Risk Management of Insurance Agency Business for Commercial Banks" that part of the insurance sales must be recorded in the whole process, and the insurance quality can be checked by recording at the later stage.

Because of its heavy work and high repeatability, the department of the quality inspection for the insurance recording has always been invested with more manpower and material resources in large insurance companies. Traditional manual quality inspection mainly includes listening to the recording and conducting compliance inspection. The general procedure for quality inspection is includes inquiring recording information related to the policy number according to the policy number recorded in the policy selected by the user, and selecting a recording and clicking a play button for playing the recording. The quality inspector listens to the recording to carry out the quality inspection of the insurance recording. Such an insurance quality inspection method is troublesome, and the waste of manpower resources is serious. How to reduce the waste of manpower resources and efficiently carry out the quality inspection of insurance recording has become a technical problem to be solved urgently at present.

### SUMMARY

The application is mainly directed to provide a quality inspection method, device, apparatus and computer storage medium for insurance recording, aiming at realizing efficient and automatic quality inspection for insurance recording.

In order to achieve the object, the application provides a quality inspection method for insurance recording. The quality inspection method for insurance recording includes the steps of:
receiving a request of quality inspection for insurance recording, and acquiring a policy identifier contained in the request of quality inspection for insurance recording and target recording information associated with the policy identifier;
inputting the target recording information into a preset voice recognition model to obtain target text information corresponding to the target recording information;
determining an insurance type according to the policy identifier, acquiring a basic policy corresponding to the insurance type and insurance information in the basic policy, and determining standard text information according to the insurance information; and
comparing the target text information with the standard text information to obtain a comparison result, and outputting a quality inspection result for insurance recording according to the comparison result.

In addition, in order to achieve the object, the application also provides a quality inspection device for insurance recording, wherein the quality inspection device for insurance recording includes:
an acquisition module configured for receiving a request of quality inspection for insurance recording, and acquiring a policy identifier contained in the request of quality inspection for insurance recording and target recording information associated with the policy identifier;
an input recognition module configured for inputting the target recording information into a preset voice recognition model to obtain target text information corresponding to the target recording information;
a standard acquisition module configured for determining an insurance type according to the policy identifier, acquiring a basic policy corresponding to the insurance type and insurance information in the basic policy, and determining standard text information according to the insurance information; and
a comparison output module configured for comparing the target text information with the standard text information to obtain a comparison result, and outputting a quality inspection result for insurance recording according to the comparison result.

In addition, in order to achieve the object, the invention also provides a quality inspection apparatus for insurance recording.

The quality inspection apparatus for insurance recording includes a memory, a processor, and computer readable instructions stored on the memory and executable on the processor, wherein:
The computer readable instructions, when executed by the processor, perform the steps of the quality inspection method for insurance recordings as described above.

In addition, to achieve the object, the present application also provides a computer storage medium.

The computer storage medium has stored thereon computer readable instructions which, when executed by a processor, perform the steps of the quality inspection method for insurance recordings as described above.

The embodiment of the invention provides a quality inspection method, device, apparatus and computer storage medium for insurance recording, wherein a quality inspection terminal performs the steps of receiving a request of quality inspection for insurance recording, and acquiring a policy identifier contained in the request of quality inspection for insurance recording and target recording information associated with the policy identifier; inputting the target recording information into a preset voice recognition model to obtain target text information corresponding to the target recording information; determining an insurance type according to the policy identifier, acquiring a basic policy corresponding to the insurance type and insurance information in the basic policy, and determining standard text information according to the insurance information; and comparing the target text information with the standard text information to obtain a comparison result, and outputting a quality inspection result for insurance recording according to the comparison result. In the present application, a voice recognition model is preset on the insurance quality inspection terminal to recognize the recording information during insurance sale to obtain text information corresponding to the recording information, and judge whether the insurance sale meets the requirements according to the recognized text information. The invention realizes the automatic quality inspection for insurance recording, improves the efficiency of the insurance quality inspection and reduces the waste of manpower resources. Meanwhile, it simultaneously improves the accuracy of the insurance quality inspection by comparing the text information with the standard text information.

### BRIEF DESCRIPTION OF THE ACCOMPANYING DRAWINGS

Fig. 1 is a structure diagram of a device of hardware operating environment according to an embodiment of the present application;
Fig. 2 is a flow diagram of a first embodiment of a quality inspection method for insurance recording of the present application;
Fig. 3 is a functional block diagram of an embodiment of a quality inspection device for insurance recording of the present application.

The implementation, functional features and advantages of the objects of the present application will be further described with reference to the embodiments and the accompanying drawings.

### DETAILED DESCRIPTION OF ILLUSTRATED EMBODIMENTS

It should be understood that the specific embodiments described herein are merely illustrative of the present application and are not intended to be limiting thereof.

Since only the quality inspector can listen to the recorded information in the prior art, the quality inspector manually judges whether the recording information contains all the user notice information so as to obtain a quality inspection result for insurance recording.

The main solutions of the embodiments of the present application includes presetting a voice recognition model, recognizing and converting the recording information into corresponding text information by the voice recognition model, and comparing the converted text information with standard text information; if the text information is matched with the standard text information (i.e. it is determined that the recording information contains all user note information), a quality inspection terminal judges that the quality inspection result for insurance recording conforms to the insurance sales requirements; if the text information is not matched with the standard text information, (i.e., it is determined that the recorded information contains part of the user's notice information, or does not contain the user's notice information), the quality inspection terminal determines that the quality inspection result for insurance recording does not meet the insurance sales requirements.

For example, insurance recording information with a policy number of 0001 is input into a preset voice recognition model, voice and semantic recognition is performed on the insurance recording information to obtain an insurance recording text, and keywords identified from the insurance recording text are an insurance fee of 1,000 yuan, an insurance period of May 2020, an insurance compensation amount of 20,000 yuan; and each keyword is compared with each standard keyword corresponding to the policy identifier, i.e. the preset quality inspection model obtains a recording keyword set by synonym recognition that the insurance fee of 1,000 yuan corresponds to the insurance amount of 1,000 yuan, the insurance period of 2020 corresponds to the insurance period of 2 years, and the insurance compensation amount of 20,000 yuan corresponds to the compensation amount of 20,000 yuan. Then, corresponding standard text information with the policy number of 0001 is acquired, and each standard keyword in the standard text information is acquired: the insurance amount of 1,000 yuan, the insurance period of 2 years, and the compensation amount of 20,000 yuan. By comparing the key words in the key word set with each standard key word in the standard text information, it is determined that the key words in the quality inspection key word set are matched with each standard key word, the quality inspection result for insurance recording is pass, or no pass. The invention provides a solution which converts manual insurance quality inspection into automatic quality inspection, improves the efficiency of insurance quality inspection, and reduces the waste of manpower resources, time cost and so on.

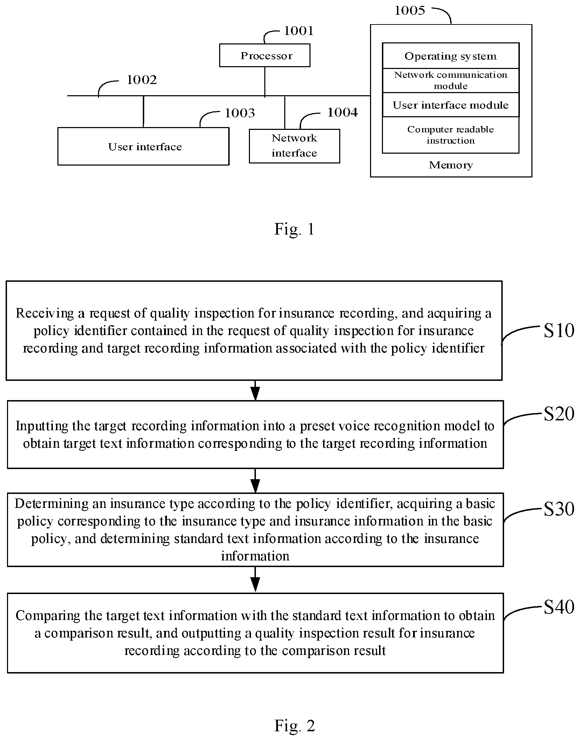

As shown in Fig. 1, it is a structure diagram of a terminal (also called a quality inspection apparatus for insurance recording, wherein the quality inspection apparatus for insurance recording can be composed of a separate quality inspection device for insurance recording or can be formed by combining other devices with the quality inspection device for insurance recording) of hardware operating environment according to the embodiment of the invention.

According to the embodiment of the invention, the terminal can be a fixed terminal or a mobile terminal, wherein the fixed terminal is such as an internet of things device, an intelligent air conditioner with networking function, an intelligent lamp, an intelligent power supply and the like; and the mobile terminal is such as an intelligent sound box with networking function, autonomous vehicles, a personal computer, an intelligent mobile phone, a tablet computer, an electronic book reader, a portable computer and other terminal equipment with display function.

As shown in Fig. 1, the terminal may include a processor 1001, such as a central processing unit (CPU), a network interface 1004, a user interface 1003, a memory 1005, and a communication bus 1002. The communication bus 1002 is configured, among other things, to enable connection communication between these components. The user interface 1003 may include a display, an input unit such as a Keyboard, and the optional user interface 1003 may also include a standard wired interface and a wireless interface. The network interface 1004 may optionally include a standard wired interface, and a wireless interface (e.g., Wireless Fidelity, and a WIFI interface). The memory 1005 may be a high-speed RAM memory or a non-volatile memory, such as a disk memory. The memory 1005 may optionally be a memory device separate from the afore mentioned processor 1001.

Optionally, the terminal can further comprise a camera, an RF (Radio Frequency) circuit, a sensor, an audio circuit and a WiFi module; the input unit is such as a display screen and a touch screen; and the network interface may optionally include Bluetooth and probes in addition to WiFi in the wireless interface. Among other things, the sensors include such as light sensors, motion sensors, and other sensors. Specifically, the light sensor can comprise an ambient light sensor and a proximity sensor. Of course, the mobile terminal may also be provided with other sensors such as gyroscopes, barometers, hygrometers, thermometers, infrared sensors, etc., which will not be described in detail herein.

It will be understood by those skilled in the art that the terminal structure shown in Fig. 1 is not intended to limit the terminal, and may include more or fewer components than shown, or some combination of components, or different arrangements of components.

As shown in Fig. 1, the computer software product is stored on a storage medium (the storage medium is also called a computer storage media, a computer medium, a readable medium, a readable storage medium, a computer readable storage medium, or directly called a medium, etc., and may be a non-volatile readable storage medium, such as RAM, diskettes, optical disks), including instructions to cause terminal equipment (which may be a cell phone, a computer, a server, an air conditioner, or a network device, etc.) to perform the methods described in the various embodiments of the present application. The memory 1005, which is a computer storage medium, may include an operating system, a network communication module, a user interface module, and computer readable instructions therein.

In the terminal shown in Fig. 1, the network interface 1004 is mainly configured for connecting a background server and communicating data with the background server; the user interface 1003 is mainly configured for connecting a client (user side) and communicating data with the client; and the processor 1001 may be configured for invoking computer readable instructions stored in the memory 1005 and performing steps in the quality inspection method for insurance recording as provided in the following embodiments of the present application.

Referring to Fig. 2, in a first embodiment of the quality inspection method for the insurance recording of the present application, the quality inspection method for the insurance recording includes:
Step S 10, receiving a request of quality inspection for insurance recording, and acquiring a policy identifier contained in the request of quality inspection for insurance recording and target recording information associated with the policy identifier.

A user triggers an request of quality inspection for insurance recording on a quality inspection terminal (the quality inspection terminal refers to a terminal as shown in Fig. 1), and the specific form of triggering the request of quality inspection for insurance recording is not limited; the quality inspection terminal receives the request of quality inspection for insurance recording and obtains a policy identifier contained in the request of quality inspection for insurance recording, wherein the policy identifier refers to identifier information for uniquely identifying the policy, such as a policy number; and then, the quality inspection terminal acquires the target recording information associated with the policy identifier.

In order to prevent purchasers from buying insurance without seeing insurance policies and/or insurance contracts and with insurance purchase disputes, the insurance salesperson specifies insurance product information with the purchasers in the process of insurance sale, and the insurance salesperson records the whole process of insurance sale, stores the recorded information of insurance sale when the insurance sale is completed, and associates the insurance sales recording information with the policy identifier and stores them to a database, wherein the insurance sales recording information associated and stored with the policy identifier in the request of quality inspection for insurance recording in the database is used as target recording information in the embodiment.

For example, the quality inspector inputs the policy number CCBF1022xxx259 to trigger an request of quality inspection for insurance recording, and the quality inspection terminal receives the request of quality inspection for insurance recording, acquires the policy number CCBF1022xxx259 in the request of quality inspection for insurance recording, and acquires insurance sales recording information associated with the CCBF1022xxx259 as target recording information.

Step S20, inputting the target recording information into a preset voice recognition model to obtain target text information corresponding to the target recording information.

The quality inspection terminal inputs the target recording information into the preset voice recognition model, wherein the preset voice recognition model refers to a voice recognition model trained in advance, and the preset voice recognition model comprises different recognition sub-models, such as a language family recognition sub-model (configured for recognizing a language family corresponding to the target recording information, that is, the language family recognition sub-model is configured for recognizing the target recording information as Wu dialect, Xiang dialect, Hakka dialect, Min dialect, Yue dialect, Gan dialect or mandarin) and the voice recognition sub-model, wherein the voice recognition sub-model includes a Wu dialect recognition sub-model, a Xiang dialect recognition sub-model, a Hakka dialect recognition sub-model, a Min dialect recognition sub-model and so on, the target recording information is recognized by the preset voice recognition model to obtain the target text information corresponding to the target recording information.

The steps of converting the target recording information into the corresponding target text information by the preset voice recognition model comprises:
the quality inspection terminal converts the target recording information into sound wave patterns and acquires corresponding voice characteristic parameters in the sound wave patterns, wherein the target voice characteristic parameters refer to parameters obtained by analyzing the sound wave patterns, such as Mel frequency cepstrum coefficients of the sound wave patterns; the quality inspection terminal inputs the target voice characteristic parameters into the preset voice recognition model and obtains a target language family to which the target recording information belongs by a language family recognition sub-model in the preset voice recognition model; namely, the quality inspection terminal firstly processes the target voice characteristic parameters by utilizing the language family recognition sub-model in the preset voice recognition model, determines the language family corresponding to the target recording information, acquires the voice recognition sub-model corresponding to the target language system in the preset voice recognition model, and processes the target voice characteristic parameters by the voice recognition sub-model to obtain the target text information corresponding to the target recording information. For example, it the obtained target recording information by the quality inspection terminal is the Min dialect, the Min dialect recognition sub-model is selected to process the target voice characteristic parameters to obtain the target text information corresponding to the target recording information.

In the embodiment, the recording information is converted into the text information by the preset voice recognition model, so that different language families, such as Xiang dialect, Hakka dialect and the like, can be effectively recognized, the voice recognition is more accurate, and the quality inspection of insurance recording is more intelligent. The quality inspector do not need to manually listen to the recording information to carry out the quality inspection of insurance recording, and the waste of manpower resources of the quality inspection of insurance recording is reduced.

S30, determining an insurance type according to the policy identifier, acquiring a basic policy corresponding to the insurance type and insurance information in the basic policy, and determining standard text information according to the insurance information.

The quality inspection terminal determines an insurance type according to the policy identifier, that is, the quality inspection terminal analyzes the policy identifier to obtain a category number in the policy identifier and acquires an insurance type corresponding to the category number. For example, the policy identifier is CCBF1022xxx259, and then the quality inspection terminal obtains that the CCBF in the CCBF1022xxx259 is an insurance sales organization, 1 is a health insurance, 0 corresponds to an insurance amount of 1000 and a risk sum insured of 100000, 2 corresponds to an insurance period of 2 years and so on according to a coding setting rule of the CCBF1022xxx259; the quality inspection terminal acquires a basic policy corresponding to the insurance type according to an analysis result for the policy identifier, acquires insurance information in a basic policy, processes the insurance information according to a preset weight rule (wherein the preset weight rule refers to a preset weight setting rule), determines key information in the insurance information, and takes the key information as standard text information, i. e. the quality inspection terminal sets the corresponding weight of each field in the insurance information according to the preset weight rule, and takes the key information with the weight higher than the critical weight as the standard text information.

In the embodiment, the standard text information is preset, and the standard text information is used as the comparison rule of the target recording information, so that multiple standard situations of manual quality inspection are effectively avoided.

Step S40, comparing the target text information with the standard text information to obtain a comparison result, and outputting a quality inspection result for insurance recording according to the comparison result.

The quality inspection terminal compares the target text information with the standard text information, wherein the target text information and the standard text information can be realized in different modes by the quality inspection terminal. For example, a mode I includes determining the similarity between the target text information and the standard text information according to the fuzzy matching algorithm; and a mode II includes analyzing by the quality inspection terminal the target text information, comparing the target text information with the standard text information, and determining whether the target text information contains the standard text information.

The quality inspection terminal acquires a comparison result and outputs a quality inspection result for insurance recording according to the comparison result. For example, The quality inspection terminal acquires the comparison result obtained in the mode I. If the similarity between the target text information and the standard text information is higher than 80%, the quality inspection result for insurance recording is pass; and if the similarity between the target text information and the standard text information is less than or equal to 80%, the quality inspection result for insurance recording is no pass. The quality inspection terminal acquires the comparison result obtained in the mode II. If the target text information contains the standard text information, the quality inspection result for insurance recording is pass; and if the target text information does not contain the standard text information or part of the target text information contains the standard text information, the quality inspection result for insurance recording is no pass.

In the embodiment, the voice recognition model is preset on the insurance quality inspection terminal to recognize the recorded information during insurance sale so as to obtain the text information corresponding to the recorded information and judge whether the insurance sale meets the requirements according to the recognized text information. Manual quality inspection is not needed in the process, the insurance quality inspection efficiency is improved, and the waste of manpower resources is reduced. Meanwhile, the accuracy rate of insurance quality inspection is improved by comparing the text information with the standard text information.

Further, before the first embodiment of the present application, the voice recognition model needs to be preset, wherein the step of setting the voice recognition model comprises:
Step S01, respectively collecting preset dialect language family and mandarin language family reading voice data, extracting voice characteristic parameters corresponding to the voice data, and forming the voice characteristic parameters into a voice characteristic set.

In the embodiment of the application, a model construction terminal collects voice data corresponding to insurance contract provision information read by a plurality of testers in a preset dialect language family and mandarin, wherein the preset dialect language family includes Mandarin dialect, Wu dialect, Xiang dialect, Hakka dialect, Min dialect, Yue dialect and Gan dialect.

The model building terminal preprocesses each voice data, and the preprocessing mainly comprises four processes of pre-emphasis, windowing and framing, endpoint detection and noise reduction. In the pre-emphasis processing, the difference between the signal characteristics and the noise characteristics is utilized to effectively process the signal, the high-frequency part of the voice is emphasized, the influence of mouth and nose radiation is removed, and the high-frequency resolution ratio of the voice is increased. The windowed and framing process comprises windowing and framing, wherein the general framing method is an overlapping and segmentation method, an overlapping part of a previous frame and a subsequent frame is called frame shift, and the framing is realized by weighting with a movable finite-length window, that is, processing by a window function to form a windowing voice signal, wherein the window function generally adopts a Hamming window and a rectangular window. The endpoint detection is to find a starting point and an ending point of voice from a given segment of voice signal. Correct and effective endpoint detection can not only reduce the amount of calculation and processing time, but also eliminate the noise interference of a silence segment, improve the accuracy of voice recognition. The noise reduction of voice is mainly achieved by adaptive filter/spectral subtraction/Wiener filtering and other noise reduction algorithms to improve the signal-to-noise ratio.

The model construction terminal extracts voice characteristic parameters corresponding to the preprocessed voice data, wherein the voice characteristic parameters are MFCC (Mel frequency cepstrum coefficients), and the voice characteristic parameters are collected to form a voice characteristic set.

Step S02, extracting each voice characteristic parameter of a preset proportion in the voice characteristic set, and constructing an initial voice recognition model by each voice characteristic parameter.

The model construction terminal extracts each voice characteristic parameter of a preset proportion in the voice characteristic set, wherein the preset proportion is set according to specific conditions. For example, the preset proportion is set to be 1%, and the model construction terminal constructs an initial voice recognition model by using the extracted 1% voice characteristic parameters. Here, the initial voice recognition model may be established based on HMM (Hidden Markov Model).

Step S03, training the initial voice recognition model by an iterative algorithm to obtain an optimal model parameter, and taking the voice recognition model corresponding to the optimal model parameter obtained by the training as a preset voice recognition model.

The model construction terminal performs iterative algorithm training on the constructed initial voice recognition model by using 99% of voice characteristic parameters, calculates the optimal model parameters of the voice recognition model, and obtains the trained preset voice recognition model according to the optimal model parameters of the voice recognition model. Among them, the iterative algorithm may include Baum-Welch algorithm and Baum-Welch algorithm improved by K-means algorithm to improve the accuracy of the model. Specifically, the training process of the voice recognition model is as follows: 1) constructing an initial voice recognition model based on the FIMM model, and setting a parameter initial value of the voice recognition model, wherein the parameter initial value can be set by equal partition states or according to empirical estimation; setting maximum iteration times and a convergence threshold value; 3) performing state segmentation operation on input voice data by adopting a Viterbi algorithm; and 4) updating the parameters of the voice recognition model by an iterative algorithm (Baum-welch algorithm), performing iterative training on the voice data, and continuously and circularly iterating until the preset iteration times are reached or the convergence is achieved. At the moment, the optimal model parameters of the voice recognition model are obtained, and the trained voice recognition model according to the optimal model parameters are further obtained.

It needs to be additionally explained that the trained voice recognition model comprises different recognition sub-models, such as a language family recognition sub-model (configured for recognizing a language family corresponding to the target recording information, that is, the language family recognition sub-model is configured for recognizing the target recording information as Wu dialect, Xiang dialect, Hakka dialect, Min dialect, Yue dialect, Gan dialect or mandarin) and the voice recognition sub-model, wherein the voice recognition sub-model comprises a Wu dialect recognition sub-model, a Xiang dialect recognition sub-model, a Hakka dialect recognition sub-model, a Min dialect recognition sub-model and the like. According to the embodiment, the voice recognition model is trained in advance, so that the voice recognition of the machine is realized, the accuracy rate of the voice recognition is guaranteed, and the error of a quality detection result for insurance recording caused by inaccurate voice recognition is reduced.

On the basis of the first embodiment of the application, the embodiment of the quality inspection method for insurance recording of the application is further provided.

This embodiment is a refinement of step S40 of the first embodiment, and two specific implementations of comparing the target text information with the standard text information to obtain a comparison result and outputting a quality inspection result for insurance recording according to the comparison result are given in this embodiment.

Mode I: converting the document information into simhash numbers and comparing the simhash numbers to obtain a quality inspection result for insurance recording specifically includes:
Step S41, respectively processing the target text information and the standard text information according to a preset fuzzy matching model to obtain a target simhash sequence and a standard simhash sequence;

The quality inspection terminal respectively processes the target text information and the standard text information according to the preset fuzzy matching model, wherein the preset fuzzy matching model refers to a preset fuzzy matching model model, and the preset fuzzy matching model can comprise a word segmentation sub-algorithm, a Hash sub-algorithm and the like.

Firstly, the quality inspection terminal performs word segmentation on the target text information and the standard text information according to a word segmentation sub-algorithm to obtain a target word segmentation sequence (also called a text field) corresponding to the target text information and a standard word segmentation sequence corresponding to the standard text information. Secondly, the quality inspection terminal processes the target word segmentation sequence and the standard word segmentation sequence by the Hash sub-algorithm to obtain a target Hash sequence and a standard Hash sequence. Namely, the quality inspection terminal converts the target word segmentation sequence and the standard word segmentation sequence corresponding to the target text information and the standard text information according to the Hash sub-algorithm to obtain a target Hash sequence and a standard Hash; and then, the quality inspection terminal combines the target Hash sequence and the standard Hash sequence and performs dimension reduction processing to the same obtain a target simhash sequence and a standard simhash sequence.

In the embodiment, the target text information and the standard text information are processed to obtain the target simhash sequence and the standard simhash sequence, and the document information is compared by the target simhash sequence and the standard simhash sequence.

Step S42, comparing the target simhash sequence with the standard simhash sequence to determine the similarity, and taking the similarity as a comparison result.

The quality inspection terminal compares the target simhash sequence with the standard simhash sequence to determine the similarity of the target simhash sequence and the standard simhash sequence. That is, the quality inspection terminal determines a similarity percentage of the target simhash sequence and the standard simhash sequence, and takes the similarity as the comparison result.

Step S43, acquiring the similarity in the comparison result, and comparing the similarity with a preset threshold value.

The quality inspection terminal acquires the similarity in the comparison result, and compares the similarity with the preset threshold value, wherein the preset threshold value refers to a preset similarity critical value, and the preset threshold value can be set according to specific situations. For example, the preset threshold value is set to 80%.

Step S44, outputting a quality inspection result for insurance recording quality as meeting the requirements if the similarity exceeds the preset threshold value, and outputting a quality inspection result for insurance recording quality as not meeting the requirements if the similarity does not exceed the preset threshold value.

The quality inspection terminal acquires the comparison result of the similarity and the preset threshold value. If the similarity exceeds the preset threshold value, the quality inspection result for insurance recording is output as meeting the requirements; and if the similarity does not exceed the preset threshold value, the quality inspection result for insurance recording is output as not meeting the requirements.

In the embodiment, the document information is converted into simhash numbers, and comparing whether the two documents are similar improves comparison efficiency.

Mode II, performing word segmentation processing on the target text information and the standard text information and judging a quality inspection result for insurance recording according to the keyword set obtained by word segmentation processing specifically includes:
Step S45, acquiring the standard text information corresponding to the policy identifier, and respectively processing the target text information and the standard text information according to a preset word segmentation method to obtain a target keyword set corresponding to the target text information and a standard keyword set corresponding to the standard text information.

The quality inspection terminal acquires the standard text information corresponding to the policy identifier, and respectively processes the target text information and the standard text information according to the preset word segmentation method, wherein the preset word segmentation method sets a preset word segmentation algorithm to obtain the target keyword set corresponding to the target text information and the standard keyword set corresponding to the standard text information.

Step S46, comparing the target keyword set with the standard keyword set to judge whether the standard keyword set is a subset of the target keyword set.

The quality inspection terminal compares the target keyword set with the standard keyword set. That is, the quality inspection terminal compares each keyword in the target keyword set with each keyword in the standard keyword set, and determines whether the standard keyword set is a subset of the target keyword set by judging whether the target keyword set contains all keywords in the standard keyword set.

Step S47, outputting a quality inspection result for insurance recording as meeting the requirements if the standard keyword set is a subset of the target keyword set; and outputting a quality inspection result for insurance recording as not meeting the requirements if the standard keyword set is not a subset of the target keyword set.

If the standard keyword set is a subset of the target keyword set, that is, all keywords in the standard keyword set are contained in the target keyword set, a quality inspection result for insurance recording is output as meeting the requirements; and if the standard keyword set is not a subset of the target keyword set, that is, part of keywords in the standard keyword set are contained in the target keyword set, or keywords in the standard keyword set are not contained in the target keyword set, a quality inspection result for insurance recording is output as not meeting the requirements. In the embodiment, whether the target text information is matched with the standard text information is determined by the keyword comparison method, and the quality inspection result for insurance recording is finally obtained, so that the insurance quality inspection is more intelligent.

Additional instructions are provided that the two implementations presented in this embodiment can be combined, the results processed in the two modes can be weighted and averaged, and the quality inspection result for insurance recording can be finally determined, wherein the specific situation where the mode I and the mode II are combined is not described in detail in this embodiment.

Further, on the basis of the above-described embodiment, a second embodiment of the quality inspection method for the insurance recording of the present application is provided.

According to the embodiment, the recording quality inspection result is output and displayed, so that a user can conveniently view the recording quality inspection result. Specifically, the quality control method for insurance recording includes:
Step S5, inputting the quality inspection result for insurance recording into a preset quality inspection template to obtain a quality inspection log corresponding to the request of quality inspection for insurance recording.

The quality inspection terminal inputs the quality inspection result for insurance recording into a preset quality inspection template, wherein the preset quality inspection template refers to a preset quality inspection document, and the quality inspection terminal receives the quality inspection result for insurance recording and inputs the quality inspection result for insurance recording into a position corresponding to the preset quality inspection template to obtain a quality inspection log corresponding to the request of quality inspection for insurance recording.

Step S60, displaying the quality inspection result for insurance recording in the quality inspection log for a quality inspector to view.

The quality inspection terminal displays the quality inspection result for insurance recording in the quality inspection log, so that the quality inspector can view the quality inspection log and perform the quality inspection. In the embodiment, the quality inspection result for insurance recording is input into the preset quality inspection template to obtain the quality inspection log corresponding to the request of quality inspection for insurance recording, so that the insurance quality inspector can check more conveniently.

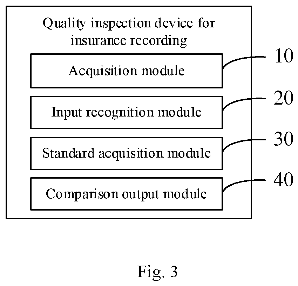

In addition, referring to Fig. 3, the embodiment of the invention also provides a quality inspection device for insurance recording, wherein the quality inspection device for insurance recording comprises:
an acquisition module 10 configured for receiving a request of quality inspection for insurance recording, and acquiring a policy identifier contained in the request of quality inspection for insurance recording and target recording information associated with the policy identifier;
an input recognition module 20 configured for inputting the target recording information into a preset voice recognition model to obtain target text information corresponding to the target recording information;
a standard acquisition module 30 configured for determining an insurance type according to the policy identifier, acquiring a basic policy corresponding to the insurance type and insurance information in the basic policy, and determining standard text information according to the insurance information; and
a comparison output module 40 configured for comparing the target text information with the standard text information to obtain a comparison result, and outputting a quality inspection result for insurance recording according to the comparison result.

Optionally, the quality inspection device for insurance recording comprises:
a collection module configured for respectively collecting preset dialect language family and mandarin language family reading voice data, extracting voice characteristic parameters corresponding to the voice data, and forming the voice characteristic parameters into a voice characteristic set;
an extraction and construction module configured for extracting each voice characteristic parameter of a preset proportion in the voice characteristic set, and constructing an initial voice recognition model by each voice characteristic parameter; and
a model determination module configured for training the initial voice recognition model by an iterative algorithm to obtain an optimal model parameter, and taking the voice recognition model corresponding to the optimal model parameter obtained by the training as a preset voice recognition model;
wherein the input recognition module 20 comprises:
   a parameter acquisition unit configured for converting the target recording information into a sound wave pattern, and acquiring a target voice characteristic parameter corresponding to the sound wave pattern;
   a language family determination unit configured for inputting the target voice characteristic parameter into a preset voice recognition model, and obtaining a target language family to which the target recording information belongs by a language family recognition sub-model in the preset voice recognition model; and
   a recognition unit configured for acquiring a voice recognition sub-model corresponding to the target language system in the preset voice recognition model, and processing the target voice characteristic parameter by the voice recognition sub-model to obtain target text information corresponding to the target recording information.

Optionally, the standard acquisition module 30 comprises:
an analysis unit configured for analyzing the policy identifier to obtain a category number in the policy identifier and acquiring an insurance type corresponding to the category number; and
a standard acquisition unit configured for acquiring a basic policy corresponding to the insurance type and insurance information in the basic policy, processing the insurance information according to a preset weight rule, determining key information in the insurance information, and taking the key information as standard text information.

Optionally, the comparison output module 40 comprises:
a Simhash conversion submodule configured for respectively processing the target text information and the standard text information according to a preset fuzzy matching model to obtain a target simhash sequence and a standard simhash sequence;
a comparison submodule configured for comparing the target simhash sequence with the standard simhash sequence to determine the similarity, and taking the similarity as a comparison result;
an acquisition comparison submodule configured for acquiring the similarity in the comparison result, and comparing the similarity with a preset threshold value;
a first judgment submodule configured for outputting a quality inspection result for insurance recording as meeting the requirements if the similarity exceeds the preset threshold value; and
a second judgment submodule configured for outputting a quality inspection result for insurance recording as not meeting the requirements if the similarity does not exceed the preset threshold value.

Optionally, the preset fuzzy matching model comprises a word segmentation sub-algorithm and a Hash sub-algorithm; and the Simhash conversion submodule further comprises:
a word segmentation processing unit configured for processing the target text information and the standard text information according to the word segmentation sub-algorithm to obtain a target word segmentation sequence and a standard word segmentation sequence;
a first processing unit configured for processing the target word segmentation sequence and the standard word segmentation sequence by the Hash sub-algorithm to obtain a target Hash sequence and a standard Hash sequence; and
a second processing unit configured for subjecting the target Hash sequence and the standard Hash sequence to merging and dimension reduction processing to obtain a target simhash sequence and a standard simhash sequence.

Optionally, the comparison output module 40 further comprises:
a word segmentation processing unit configured for acquiring the standard text information corresponding to the policy identifier, and respectively processing the target text information and the standard text information according to a preset word segmentation method to obtain a target keyword set corresponding to the target text information and a standard keyword set corresponding to the standard text information;
a keyword comparison unit configured for comparing the target keyword set with the standard keyword set to judge whether the standard keyword set is a subset of the target keyword set;
a first output unit configured for outputting a quality inspection result for insurance recording as meeting the requirements if the standard keyword set is a subset of the target keyword set; and
a second output unit configured for outputting a quality inspection result for insurance recording as not meeting the requirements if the standard keyword set is not a subset of the target keyword set.

Optionally, the quality inspection device for insurance recording further comprises:
a log generation module configured for inputting the quality inspection result for insurance recording into a preset quality inspection template to obtain a quality inspection log corresponding to the request of quality inspection for insurance recording; and
a log display module configured for displaying the quality inspection result for insurance recording in the quality inspection log for a quality inspector to view.

The steps realized by various functional modules of the quality inspection device for insurance recording can refer to various embodiments of the insurance recording quality inspection method of the present application, and will not be described in detail herein.

In addition, the embodiment of the invention also provides a computer storage medium.

The computer storage medium has stored thereon computer readable instructions which, when executed by a processor, perform operations in the quality inspection method for insurance recording provided by the embodiments as described above.

From the above description of the embodiments, it will be clear to a person skilled in the art that the above-described embodiment method can be implemented by means of software plus the necessary general-purpose hardware platform, and can be certainly by the hardware. In many cases the former is a better embodiment. Based on this understanding, the technical solution of the present application, in essence or in part contributing to the prior art, may be embodied in the form of a software product stored in a storage medium (e.g., ROM/RAM, diskette, optical disk) as described above comprising instructions for causing terminal equipment (which may be a cell phone, a computer, a server, an air conditioner, or a network device, etc.) to perform the methods described in the various embodiments of the present application.

The above is merely preferred embodiments of the present application and is not intended to limit the scope of the present application. The equivalent structures or equivalent processes made by the description and drawings of the present application or the description and drawings of the present application utilized directly or indirectly in other related fields of technology should be similarly included within the scope of the present application.

## Claims

1. A quality inspection method for insurance recording, comprising the steps of:
receiving a request of quality inspection for insurance recording, and acquiring a policy identifier contained in the request of quality inspection for insurance recording and target recording information associated with the policy identifier;
inputting the target recording information into a preset voice recognition model to obtain target text information corresponding to the target recording information;
determining an insurance type according to the policy identifier, acquiring a basic policy corresponding to the insurance type and insurance information in the basic policy, and determining standard text information according to the insurance information; and
comparing the target text information with the standard text information to obtain a comparison result, and outputting a quality inspection result for insurance recording according to the comparison result.

2. The quality inspection method for insurance recording according to claim 1, wherein before the step of inputting the target recording information into a preset voice recognition model to obtain target text information corresponding to the target recording information, the method comprises the steps of:
respectively collecting preset dialect language family and mandarin language family reading voice data, extracting voice characteristic parameters corresponding to the voice data, and forming the voice characteristic parameters into a voice characteristic set;
extracting each voice characteristic parameter of a preset proportion in the voice characteristic set, and constructing an initial voice recognition model by each voice characteristic parameter;
training the initial voice recognition model by an iterative algorithm to obtain an optimal model parameter, and taking the voice recognition model corresponding to the optimal model parameter obtained by the training as a preset voice recognition model;
wherein the step of inputting the target recording information into a preset voice recognition model to obtain target text information corresponding to the target recording information comprises:
converting the target recording information into a sound wave pattern, and acquiring a target voice characteristic parameter corresponding to the sound wave pattern;
inputting the target voice characteristic parameter into a preset voice recognition model, and obtaining a target language family to which the target recording information belongs by a language family recognition sub-model in the preset voice recognition model; and
acquiring a voice recognition sub-model corresponding to the target language system in the preset voice recognition model, and processing the target voice characteristic parameter by the voice recognition sub-model to obtain target text information corresponding to the target recording information.

3. The quality inspection method for insurance recording according to claim 1, wherein the steps of determining an insurance type according to the policy identifier, acquiring a basic policy corresponding to the insurance type and insurance information in the basic policy, and determining standard text information according to the insurance information comprises:
analyzing the policy identifier to obtain a category number in the policy identifier and acquiring an insurance type corresponding to the category number;
acquiring a basic policy corresponding to the insurance type and insurance information in the basic policy, processing the insurance information according to a preset weight rule, determining key information in the insurance information, and taking the key information as standard text information.

4. The quality inspection method for insurance recording according to claim 1, wherein the step of comparing the target text information with the standard text information to obtain a comparison result, and outputting a quality inspection result for insurance recording according to the comparison result comprises:
respectively processing the target text information and the standard text information according to a preset fuzzy matching model to obtain a target simhash sequence and a standard simhash sequence;
comparing the target simhash sequence with the standard simhash sequence to determine the similarity, and taking the similarity as a comparison result;
acquiring the similarity in the comparison result, and comparing the similarity with a preset threshold value;
outputting a quality inspection result for insurance recording as meeting the requirements if the similarity exceeds the preset threshold value; and
outputting a quality inspection result for insurance recording quality as not meeting the requirements if the similarity does not exceed the preset threshold value.

5. The quality inspection method for insurance recording according to claim 4, wherein the preset fuzzy matching model comprises a word segmentation sub-algorithm and a Hash sub-algorithm;
the step of respectively processing the target text information and the standard text information according to a preset fuzzy matching model to obtain a target simhash sequence and a standard simhash sequence comprises;
processing the target text information and the standard text information according to the word segmentation sub-algorithm to obtain a target word segmentation sequence and a standard word segmentation sequence;
processing the target word segmentation sequence and the standard word segmentation sequence by the Hash sub-algorithm to obtain a target Hash sequence and a standard Hash sequence; and
subjecting the target Hash sequence and the standard Hash sequence to merging and dimension reduction processing to obtain a target simhash sequence and a standard simhash sequence.

6. The quality inspection method for insurance recording according to claim 1, wherein the step of comparing the target text information with the standard text information to obtain a comparison result, and outputting a quality inspection result for insurance recording according to the comparison result further comprises:
acquiring the standard text information corresponding to the policy identifier, and respectively processing the target text information and the standard text information according to a preset word segmentation method to obtain a target keyword set corresponding to the target text information and a standard keyword set corresponding to the standard text information;
comparing the target keyword set with the standard keyword set to judge whether the standard keyword set is a subset of the target keyword set;
outputting a quality inspection result for insurance recording as meeting the requirements if the standard keyword set is a subset of the target keyword set; and
outputting a quality inspection result for insurance recording as not meeting the requirements if the standard keyword set is not a subset of the target keyword set.

7. The quality inspection method for insurance recording according to claim 1, wherein the step of comparing the target text information with the standard text information to obtain a comparison result, and outputting a quality inspection result for insurance recording according to the comparison result comprises:
inputting the quality inspection result for insurance recording into a preset quality inspection template to obtain a quality inspection log corresponding to the request of quality inspection for insurance recording; and
displaying the quality inspection result for insurance recording in the quality inspection log for a quality inspector to view.

8. A quality inspection device for insurance recording, wherein the quality inspection device for insurance recording comprises:
an acquisition module configured for receiving a request of quality inspection for insurance recording, and acquiring a policy identifier contained in the request of quality inspection for insurance recording and target recording information associated with the policy identifier;
an input recognition module configured for inputting the target recording information into a preset voice recognition model to obtain target text information corresponding to the target recording information;
a standard acquisition module configured for determining an insurance type according to the policy identifier, acquiring a basic policy corresponding to the insurance type and insurance information in the basic policy, and determining standard text information according to the insurance information; and
a comparison output module configured for comparing the target text information with the standard text information to obtain a comparison result, and outputting a quality inspection result for insurance recording according to the comparison result.

9. The quality inspection device for insurance recording according to claim 8, wherein the quality inspection device for insurance recording comprises:
a collection module configured for respectively collecting preset dialect language family and mandarin language family reading voice data, extracting voice characteristic parameters corresponding to the voice data, and forming the voice characteristic parameters into a voice characteristic set;
an extraction and construction module configured for extracting each voice characteristic parameter of a preset proportion in the voice characteristic set, and constructing an initial voice recognition model by each voice characteristic parameter; and
a model determination module configured for training the initial voice recognition model by an iterative algorithm to obtain an optimal model parameter, and taking the voice recognition model corresponding to the optimal model parameter obtained by the training as a preset voice recognition model;
wherein the input recognition module comprises:
a parameter acquisition unit configured for converting the target recording information into a sound wave pattern, and acquiring a target voice characteristic parameter corresponding to the sound wave pattern;
a language family determination unit configured for inputting the target voice characteristic parameter into a preset voice recognition model, and obtaining a target language family to which the target recording information belongs by a language family recognition sub-model in the preset voice recognition model; and
a recognition unit configured for acquiring a voice recognition sub-model corresponding to the target language system in the preset voice recognition model, and processing the target voice characteristic parameter by the voice recognition sub-model to obtain target text information corresponding to the target recording information.

10. The quality inspection device for insurance recording according to claim 8, wherein the standard acquisition module comprises:
an analysis unit configured for analyzing the policy identifier to obtain a category number in the policy identifier and acquiring an insurance type corresponding to the category number; and
a standard acquisition unit configured for acquiring a basic policy corresponding to the insurance type and insurance information in the basic policy, processing the insurance information according to a preset weight rule, determining key information in the insurance information, and taking the key information as standard text information.

11. The quality inspection device for insurance recording according to claim 8, wherein the comparison output module comprises:
a Simhash conversion submodule configured for respectively processing the target text information and the standard text information according to a preset fuzzy matching model to obtain a target simhash sequence and a standard simhash sequence;
a comparison submodule configured for comparing the target simhash sequence with the standard simhash sequence to determine the similarity, and taking the similarity as a comparison result;
an acquisition comparison submodule configured for acquiring the similarity in the comparison result, and comparing the similarity with a preset threshold value;
a first judgment submodule configured for outputting a quality inspection result for insurance recording as meeting the requirements if the similarity exceeds the preset threshold value; and
a second judgment submodule configured for outputting a quality inspection result for insurance recording as not meeting the requirements if the similarity does not exceed the preset threshold value.

12. The quality inspection device for insurance recording according to claim 11, wherein the preset fuzzy matching model comprises a word segmentation sub-algorithm and a Hash sub-algorithm, and the Simhash conversion submodule further comprises:
a word segmentation processing unit configured for processing the target text information and the standard text information according to the word segmentation sub-algorithm to obtain a target word segmentation sequence and a standard word segmentation sequence;
a first processing unit configured for processing the target word segmentation sequence and the standard word segmentation sequence by the Hash sub-algorithm to obtain a target Hash sequence and a standard Hash sequence; and
a second processing unit configured for subjecting the target Hash sequence and the standard Hash sequence to merging and dimension reduction processing to obtain a target simhash sequence and a standard simhash sequence.

13. The quality inspection device for insurance recording according to claim 8, wherein the comparison output module further comprises:
a word segmentation processing unit configured for acquiring the standard text information corresponding to the policy identifier, and respectively processing the target text information and the standard text information according to a preset word segmentation method to obtain a target keyword set corresponding to the target text information and a standard keyword set corresponding to the standard text information;
a keyword comparison unit configured for comparing the target keyword set with the standard keyword set to judge whether the standard keyword set is a subset of the target keyword set;
a first output unit configured for outputting a quality inspection result for insurance recording as meeting the requirements if the standard keyword set is a subset of the target keyword set; and
a second output unit configured for outputting a quality inspection result for insurance recording as not meeting the requirements if the standard keyword set is not a subset of the target keyword set.

14. The quality inspection device for insurance recording according to claim 8, wherein the quality inspection device for insurance recording further comprises:
a log generation module configured for inputting the quality inspection result for insurance recording into a preset quality inspection template to obtain a quality inspection log corresponding to the request of quality inspection for insurance recording; and
a log display module configured for displaying the quality inspection result for insurance recording in the quality inspection log for a quality inspector to view.

15. A quality inspection apparatus for insurance recording, wherein the quality inspection apparatus for insurance recording comprises a memory, a processor, and computer readable instructions stored on the memory and executable on the processor, wherein:
the computer readable instructions, when executed by the processor, perform the steps of:
receiving a request of quality inspection for insurance recording, and acquiring a policy identifier contained in the request of quality inspection for insurance recording and target recording information associated with the policy identifier;
inputting the target recording information into a preset voice recognition model to obtain target text information corresponding to the target recording information;
determining an insurance type according to the policy identifier, acquiring a basic policy corresponding to the insurance type and insurance information in the basic policy, and determining standard text information according to the insurance information; and
comparing the target text information with the standard text information to obtain a comparison result, and outputting a quality inspection result for insurance recording according to the comparison result.

16. The quality inspection apparatus for insurance recording according to claim 15, wherein the computer readable instructions, when executed by the processor, perform the steps of:
respectively collecting preset dialect language family and mandarin language family reading voice data, extracting voice characteristic parameters corresponding to the voice data, and forming the voice characteristic parameters into a voice characteristic set;
extracting each voice characteristic parameter of a preset proportion in the voice characteristic set, and constructing an initial voice recognition model by each voice characteristic parameter;
training the initial voice recognition model by an iterative algorithm to obtain an optimal model parameter, and taking the voice recognition model corresponding to the optimal model parameter obtained by the training as a preset voice recognition model;
wherein the computer readable instructions, when executed by the processor, performs the step of inputting the target recording information into a preset voice recognition model to obtain target text information corresponding to the target recording information, comprising:
converting the target recording information into a sound wave pattern, and acquiring a target voice characteristic parameter corresponding to the sound wave pattern;
inputting the target voice characteristic parameter into a preset voice recognition model, and obtaining a target language family to which the target recording information belongs by a language family recognition submodel in the preset voice recognition model; and
acquiring a voice recognition sub-model corresponding to the target language system in the preset voice recognition model, and processing the target voice characteristic parameter by the voice recognition sub-model to obtain target text information corresponding to the target recording information.

17. The quality inspection apparatus for insurance recording according to claim 15, wherein the computer readable instructions, when executed by the processor, performs the step of determining an insurance type according to the policy identifier, acquiring a basic policy corresponding to the insurance type and insurance information in the basic policy, and determining standard text information according to the insurance information, comprising:
analyzing the policy identifier to obtain a category number in the policy identifier and acquiring an insurance type corresponding to the category number;
acquiring a basic policy corresponding to the insurance type and insurance information in the basic policy, processing the insurance information according to a preset weight rule, determining key information in the insurance information, and taking the key information as standard text information.

18. The quality inspection apparatus for insurance recording according to claim 15, wherein the computer readable instructions, when executed by the processor, performs the step of comparing the target text information with the standard text information to obtain a comparison result, and outputting a quality inspection result for insurance recording according to the comparison result, comprising
respectively processing the target text information and the standard text information according to a preset fuzzy matching model to obtain a target simhash sequence and a standard simhash sequence;
comparing the target simhash sequence with the standard simhash sequence to determine the similarity, and taking the similarity as a comparison result;
acquiring the similarity in the comparison result, and comparing the similarity with a preset threshold value;
outputting a quality inspection result for insurance recording as meeting the requirements if the similarity exceeds the preset threshold value; and
outputting a quality inspection result for insurance recording quality as not meeting the requirements if the similarity does not exceed the preset threshold value.

19. The quality inspection apparatus for insurance recording according to claim 18, wherein the preset fuzzy matching model comprises a word segmentation sub-algorithm and a Hash sub-algorithm; and the computer readable instructions, when executed by the processor, performs the step of respectively processing the target text information and the standard text information according to a preset fuzzy matching model to obtain a target simhash sequence and a standard simhash sequence, comprising:
processing the target text information and the standard text information according to the word segmentation sub-algorithm to obtain a target word segmentation sequence and a standard word segmentation sequence;
processing the target word segmentation sequence and the standard word segmentation sequence by the Hash sub-algorithm to obtain a target Hash sequence and a standard Hash sequence; and
subjecting the target Hash sequence and the standard Hash sequence to merging and dimension reduction processing to obtain a target simhash sequence and a standard simhash sequence.

20. A computer storage medium having computer readable instructions stored thereon that, when executed by a processor, perform the steps of:
receiving a request of quality inspection for insurance recording, and acquiring a policy identifier contained in the request of quality inspection for insurance recording and target recording information associated with the policy identifier;
inputting the target recording information into a preset voice recognition model to obtain target text information corresponding to the target recording information;
determining an insurance type according to the policy identifier, acquiring a basic policy corresponding to the insurance type and insurance information in the basic policy, and determining standard text information according to the insurance information; and
comparing the target text information with the standard text information to obtain a comparison result, and outputting a quality inspection result for insurance recording according to the comparison result.
